# EUROPÄISCHE PATENTSCHRIFT

(11) **EP 1 336 922 B1**
(45) Veröffentlichungstag und Bekanntmachung des Hinweises auf die Patenterteilung: **26.03.2014**
(21) Anmeldenummer: 02028474.1
(22) Anmeldetag: 19.12.2002
(51) Int. Cl.: G06F 17/30

(54) **Verfahren und Vorrichtung zum automatischen Erstellen eines Datawarehouse**
Method and apparatus for the automatic generation of a Datawarehouse
Procédé et dispositif pour la génération automatique d'une Datawarehouse

(30) Priorität: 15.02.2002 DE 10206215
(43) Veröffentlichungstag der Anmeldung: 20.08.2003
(73) Patentinhaber: Deutsche Telekom AG, 53113 Bonn (DE)
(72) Erfinder: Cherkashin, Nikolaus, Dr., 63071 Offenbach (DE)
(74) Vertreter: Borchert, Uwe Rudolf

(56) Entgegenhaltungen:
- EP-A1- 1 076 303
- US-B1- 6 212 524
- GOLFARELLI M ET AL: "Conceptual design of data warehouses from E/R schemes" SYSTEM SCIENCES, 1998., PROCEEDINGS OF THE THIRTY-FIRST HAWAII INTERNATIONAL CONFERENCE ON KOHALA COAST, HI, USA 6-9 JAN. 1998, LOS ALAMITOS, CA, USA,IEEE COMPUT. SOC, US, Bd. 7, 6. Januar 1998 (1998-01-06), Seiten 334-343, XP010262796 ISBN: 0-8186-8255-8

## Beschreibung

Die Erfindung betrifft ein Verfahren und eine Vorrichtung zum automatischen Erstellen eines Datawarehouse.

Unter einem Datawarehouse wird eine in der Regel sehr grosse Datenbank verstanden, in der Daten insbesondere aus unterschiedlichen Datenbanken einer Firma zusammen gefasst sind. Hierdurch soll ein Zugang zu wichtigen Firmendaten auf schnelle Art und Weise ermöglicht werden. Datawarehouses werden auch als Management Information Systeme - kurz MIS - eingesetzt, um beispielsweise der Geschäftsleitung einer Firma einen schnellen Überblick sozusagen auf Knopfdruck über wichtige Firmendaten zu geben.

Ein Datawarehouse kann auf verschiedene Computer verteilt sein. Häufig umfasst es verschiedene Datenbanken und enthält Daten von unterschiedlichsten Quellen in verschiedenen Formaten. Ein Benutzer des Datawarehouse sollte möglichst Daten auf einfache Art und Weise abrufen und analysieren können. Es kann ferner Daten über die interne Struktur, über den Speicherort der Daten sowie über die entsprechenden Verbindungen zwischen den Daten enthalten.

Zu den wichtigsten Aufgaben eines Datawarehouse gehört das Erfassen, Sammeln, Verwalten und Verbreiten von Daten, die aus unterschiedlichen Quellen stammen, möglichst an einem zentralen Punkt, beispielsweise einem leistungsfähigen Rechner. Zum Erstellen eines Datawarehouse gehört das Implementieren einer Datenbank, die zur Speicherung gemeinsam verwendbarer Daten genutzt wird. Das Implementieren umfasst im wesentlichen die Schritte Datengewinnung, Verwaltung der Daten an einem zentralen Ort, Bereitstellung der Daten in Kombination mit Software-Werkzeugen, die Interpretation, Analyse und die Anfertigung von Berichten ermöglichen, sowie Erzeugung von Berichten, um anhand von konkreten Aufgabenstellungen Entscheidungen zu treffen.

Das Erstellen eines Datawarehouse ist im allgemeinen ein zeitaufwendiger, arbeitsintensiver und dadurch kostenträchtiger Prozess, für den zudem häufig Spezialisten benötigt werden. Vom funktionalen Standpunkt aus betrachtet, umfasst der Prozess des Erstellens eines Datawarehouse im wesentlichen drei Phasen:
Datenextraktion aus operationalen Quellen; Organisation, Integration und Restrukturierung von Eingabe- zu Ausgabedaten, insbesondere die Erstellung von Data Marts; und Datenanalyse und -prozessierung.

Insbesondere für den letzten Punkt wird OLAP eingesetzt. OLAP ist die Abkürzung für "online analytical processing". Darunter wird ein relationales Datenbanksystem verstanden, das zum Teil sehr komplexe Abfragen einer Datenbank ermöglicht. Diese Abfragen erlauben vor allem einen mehrdimensionalen Zugriff auf die Daten, die dadurch aus verschiedenen Sichtweise betrachtet werden können. Dies wird durch mehrere, verschiedene Kriterien, intensive Berechnungsfunktionen und spezialisierte Indizierungstechniken erreicht.

Kern eines Datawarehouse ist ein Transformationsmodul, das die Ein- in Ausgabedaten transformiert. Hierzu muss das Transformationsmodul die unterschiedlichen Strukturen der Eingabedaten aus operationalen Systemen, beispielsweise Transaktionen, Orders oder dergleichen Daten, und der Ausgabedaten verarbeiten können.

Ist jedoch die Struktur der Eingabedaten komplex, da sie beispielsweise aus vielen Tabellen mit vielen primären Schlüsseln bestehen, ist die oben erwähnte Transformation sehr aufwendig und manuell nur sehr schwer umzusetzen und zu pflegen.

Aus der US 5,809,296 sind ein Verfahren und eine Struktur für die Generierung eines logischen Modells von einzelnen, relativ einfachen Fragmenten (Klassen) eines Datawarehouse, ausgehend von einer physischen, relationalen Struktur der Eingabedaten bekannt. Allerdings ermöglicht das aus der US 5,809,296 bekannte Verfahren nur die Generierung des logischen Modells von einfachen Klassen, nicht aber eines vollständigen Datawarehouse.

In der US-B1-6 212 524 ist ein Verfahren zur Erzeugung eines Data Marts beschrieben. Bisher mussten Berater die Erzeugung, die Manipulation und die Populationprogramme für einen Data Mart von Hand kodieren, wozu viel Arbeit erforderlich ist, um den Data Mart zu erzeugen und zu bevölkern. Um diese Arbeit signifikant zu reduzieren wird vorgeschlagen, dass der Data Mart Tabellen, die Reihen und Spalten haben umfasst, und dass das Verfahren das Zugänglich machen einer Beschreibung eines Schemas umfasst, wobei das Schema die Beziehungen zwischen den Tabellen und den Spalten definiert. Die weitere Beschreibung definiert, wie Daten, manipuliert und verwendet werden können, um die Tabellen im Data Mart zu füllen. Das heißt, die Beschreibung definiert die semantische Bedeutung der Daten. Die Beschreibung wird weiterhin verwendet, um einen Satz von Befehlen zu erzeugen, um die Tabellen herzustellen. Die Befehle werden eingegebne, um die Erzeugung der Tabellen auszulösen. Wenn die semantische Bedeutung mit der Spalte und den Reihen verbunden ist, werden Programme für das Manipulieren und das Weiterleiten von Daten in die Spalten und Reihen automatisch definiert.

EP 1 076 303 A1 betrifft die Integration und das Ersttellen von ER-Diagramm sowie das Hinzufügen und Löschen von Bildschirm. Datenelemente auf einem Bildschirm oder in einem Formular werden extrahiert, und temporäre Einheiten werden geschaffen. Die erstellten Einheiten werden zusammengeführt, um eine normierte Einheit zu bilden. Eine Korrespondenz-Matrix-Tabelle, die eine Korrespondenz zwischen der normierten Einheit und jedem Bildschirm/Formular zeigt, wird erstellt. Basierend auf der Korrespondenz-Matrix-Tabelle wird eine Beziehungs-Matrix-Tabelle, die eine Beziehung zwischen normierten Einheiten anzeigt, für jeden Bildschirm / Formular erstellt. Ferner wird basierend auf der Beziehung-Matrix-Tabelle ein ER-Diagramm erstellt.
Aufgabe der vorliegenden Erfindung ist es daher, ein Verfahren und eine Vorrichtung zum automatischen Erstellen eines Datawarehouse vorzuschlagen, welche die automatische Erstellung des logischen Modells eines vollständigen Datawarehouse ermöglichen.

Diese Aufgabe wird für das Verfahren durch die Merkmale des Anspruches 1 und für die Vorrichtung durch die Merkmale des Anspruchs 2gelöst. Vorteilhafte Ausgestaltungen der Erfindung sind in den Unteransprüchen charakterisiert.

Die Erfindung schafft eine Technologie zum automatischen Erstellen eines Datawarehouse, die im wesentlichen Methode, Struktur und System des Datawarehouse betrifft. Der Kern des Datawarehouse umfasst die Organisation, Integration und Restrukturierung von Inflow- bzw. Eingabedaten zu Outflow- bzw. Ausgabedaten. Diese Technologie ermöglicht eine schnelle, sichere und vor allem vollautomatische Erstellung bzw. Entwicklung des Datawarehouse unter Vorgabe eines relationalen Datenmodells der Eingabedaten. Insbesondere wird beim relationalen Datenmodell von Listen primärer und sekundärer Schlüssel ausgegangen. Die erfindungsgemässe Technologie kann sowohl bei einer Kundenakquirierung als auch in einer Projektausführung eingesetzt werden. Sie ist zum Ausführen auf verschiedenen Rechner-Plattformen, insbesondere auf Standardrechnern wie beispielsweise PCs geeignet.

Die Erfindung betrifft ein Verfahren zum automatischen Erstellen eines Datawarehouse mit einem Entity-Relationship-Generator und einem Programmkode-Generator, wobei der Entity-Relationship-Generator basierend auf der relationalen Struktur von Eingabedaten für das Datawarehouse ein logisches Datenmodell des Datawarehouse erstellt, der Programmkode-Generator basierend auf dem logischen Datenmodell in einer Gesamttabelle alle Eingabedaten zusammenfasst und anschliessend die Gesamttabelle in einzelne Tabellen zu Data Marts unterteilt und/oder verdichtet wird.

Zum Erstellen des logischen Datenmodells werden Einheiten bzw. Entities von allgemeinen Typen, insbesondere von Datentabellen, durch zwei Schlüssel-Listen charakterisiert; wobei eine erste Schlüssel-Liste primäre Schlüssel in einer Tabelle und eine zweite Schlüssel-Liste alle Schlüssel umfasst, die nicht primäre Schlüssel sind.

Die Einheiten stehen, in einer ersten Alternative, in einem statischen binären Verhältnis vom Typ "Vater-Sohn", auch "partial order relationship" genannt, zueinander. Hierbei gilt, dass eine erste Einheit E1 zu einer zweiten Einheit E2 in einem statischen Verhältnis vom Typ "Vater-Sohn" nur dann steht, wenn (P1, S1)>P2 gilt, d.h. die Gesamtliste der Schlüssel der ersten Einheit E1, welche die Liste aller primären Schlüssel P1 und aller sekundären Schlüssel S1 der ersten Einheit E1 aufweist, umfasst alle primären Schlüssel P2 der zweiten Einheit E2.

Die Einheiten stehen, in einer zweiten Alternative in einem dynamischen binären Verhältnis vom Typ "Vater-Sohn" zueinander, wobei gilt, dass eine erste Einheit E1 zu einer zweiten Einheit E2 in einem dynamischen Verhältnis vom Typ "Vater-Sohn" nur dann steht, wenn (P1, Sd1)>P2 gilt, d.h. die Gesamtliste der Schlüssel der ersten Einheit E1, welche die Liste aller primären Schlüssel P1 der ersten Einheit E1 und die Liste aller zu einem bestimmten Zeitpunkt ermittelten "Nachfahren" Sd1 der ersten Einheit E1 aufweist, alle primären Schlüssel P2 der zweiten Einheit E2 umfasst.

Ferner werden alle Einheiten in mehrere disjunkte, als Klane bezeichnete Gruppen des Verwandtschafts-Verhältnisses vom Typ "Vater-Sohn" unterteilt. Für jede Gruppe wird hierzu eine baumartige, hierarchische Struktur aufgebaut. Am Anfang jeder Hierarchie bzw. an der Wurzel jedes Baumes steht der Urvater des jeweiligen Klanes.

Einem Klan wird jeweils eine erste und eine zweite Schlüssel-Liste zugeordnet. Die erste Schlüssel-Liste des Klanes ist die erste Schlüssel-Liste des Urvaters des Klanes und die zweite Schlüssel-Liste des Klanes ist die Liste aller Schlüssel des Klanes, die nicht in der ersten Schlüssel-Liste des Klanes stehen.

Das Datenmodel entsteht im Wesentlichen in zwei Schritten: 1) Ermitteln des Urvaters aller Eingabedaten durch Iteration der statischen Klan-Hierarchien. 2) Bildung des Datenmodels in Form einer dynamischen (s.o.) Hierarchie, die alle Tabellen des DWH umfasst.

Die Erfindung betrifft ferner eine Vorrichtung zum automatischen Erstellen eines Datawarehouse, die einen Entity-Relationship-Generator, der basierend auf der relationalen Struktur von Eingabedaten für das Datawarehouse ein logisches Datenmodell des Datawarehouse erstellt, einen Programmkode-Generator, der basierend auf dem logischen Datenmodell in einer Gesamttabelle alle Eingabedaten zusammenfasst, und Mittel aufweist, welche die Gesamttabelle in einzelne Tabellen zu Data Marts unterteilt und/oder verdichtet.

Die Vorrichtung zeichnet sich vorzugsweise dadurch aus, dass sie in einem in (Entwicklungs-)Programm implementiert ist, das in einer 4GL-Programmiersprache geschrieben ist, insbesondere auf einer SAS-Plattform.

In einer weiteren bevorzugten Ausführungsform kann das Programm zum Ausführen eines Produktionsprogramms für das Datawarehouse ausgebildet sein.

Das Produktionsprogramm umfasst in einer bevorzugten Ausführungsform ein Steuerungsprogramm, Vorverarbeitungsmodule, Aggregierungsmodule und ein Integrationsmodul.

Weitere Vorteile, Merkmale und Anwendungsmöglichkeiten der vorliegenden Erfindung zum Erstellen eines Datawarehouse ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. In der Zeichnung bedeutet:

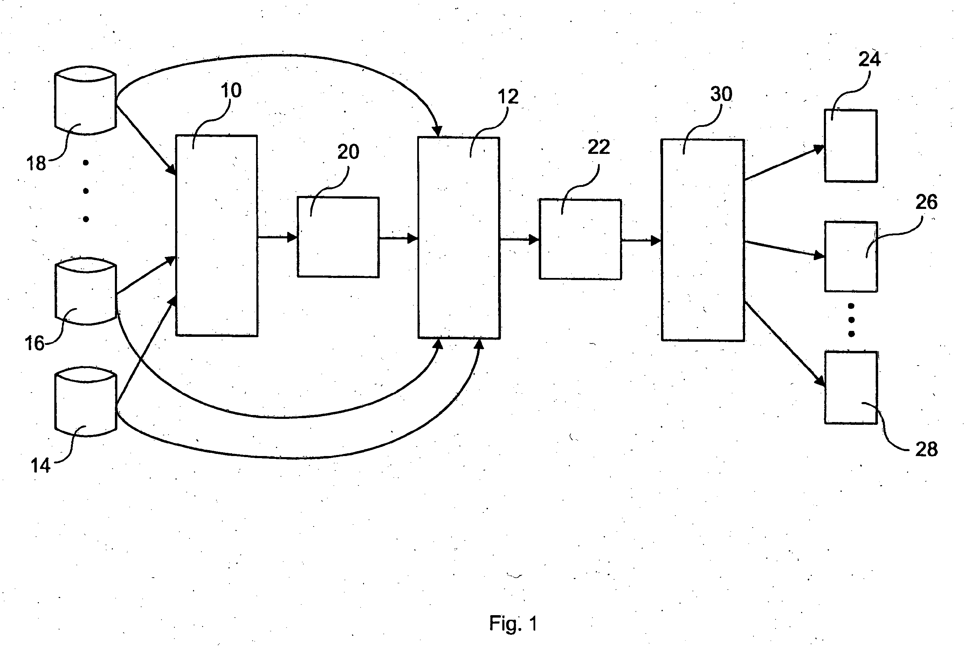

- Fig. 1: ein Ausführungsbeispiel einer erfindungsgemäßen Vorrichtung zum Erstellen eines Datawarehouse

Die in Fig. 1 dargestellte Vorrichtung umfasst einen Entity-Relationship-Generator 10, einen Programmkode-Generator 12 und Mittel zum Unterteilen einer vom Programmkode-Generator 12 erzeugten Gesamttabelle 22, die alle Eingabedaten des Datawarehouse aufweist.

Das Datawarehouse, genauer gesagt der Entity-Relationship-Generator 10 und der Programmkode-Generator 12, wird bzw. werden mit Eingabedaten aus einer ersten, zweiten und dritten Datei 14, 16 bzw. 18 versorgt. Die verschiedenen Dateien 14, 16 und 18 sind beispielsweise eine Datei mit Kundendaten, eine Datei mit Produktdaten und eine Datei mit Verkaufsdaten.

Im folgenden wird nun eine konkrete Implementierung eines Programms sowie der Datenfilestruktur oder Datenlogik für das Datawarehouse gemäß der Erfindung erläutert. Hintergrund der Implementierung ist die Bereitstellung eines Tool für eine Phase der Kundenakquirierung, mit dem ein funktionsfähiger Prototyp, je nach Anwendungsfall beispielsweise etwa im Maßstab 1:1E3 bis 1E6, eines Datawarehouse innerhalb kurzer Zeit, abhängig vom Anwendungsfall beispielsweise in Stunden oder Tagen, konstruiert werden kann. Ferner soll in einer Projektphase ein Entwicklungstool geschaffen werden, das im wesentlichen automatisch den Aufbau eines Hauptkonstrukts des Datawarehouse ermöglicht.

Das Entwicklungstool umfasst im wesentlichen folgende Komponenten:
- Vorverarbeitungsmodule mit Funktionen Keep, Drop, IfSelect, Rename;
- Aggregierungsmodule; und
- ein Integrierungsmodul.

Zuerst wird hierzu die Datenfilestruktur oder Datenlogik festgelegt. Hierzu werden alle Felder jeder Datei in zwei Gruppen eingeteilt, nämlich in eine Untergruppe primärer Felder und in eine Untergruppe sekundärer Felder. Die Datenfilestruktur bzw. Datenlogik sieht dann in einer konkreten Implementierung wie folgt aus:
DS:=Dst
   PRI:=BNKPSTCD CstPstCd
   SEC:=DISTANZ
DS:=Dpt
   PRI:=DPT BNK
   SEC:=CST DPDATE DPAMNT
DS:=Bnk
   PRI:=BNK
   SEC:=BLZ BNKPSTCD BNKAMNT
DS:=Cst
   PRI:=CST
   SEC:=CSTNAME CSTBDATE CstPstCd CstStrt CstHs OCCGROUP PROFAGE CSTAMNT
DS:=Ta
   PRI:=TA WPNR DPT BNK DATUM9
   SEC:=TAATT TAAMNT

Anschließend wird die Geschäftsstruktur oder Subjektlogik festgelegt, in der alle Felder eines Geschäfts, analog zu den Datenfiles, in sogenannte Themengruppen (Subjektgruppen) und diese in Untergruppen primärer und sekundärer Felder eingeteilt werden. Eine konkrete Implementierung der Geschäftsstruktur sieht folgendermaßen aus:
SJ:=TaX
   PRI:= Ta WPNR Dpt Bnk
   SEC:= TaAtt TaAmnt
SJ:=DptBnk
   PRI:= Dpt Bnk
   SEC:= Cst DpDate DPAmount
SJ:=WPNR
   PRI:=WpNr
   SEC:= WpName WpAtt
SJ:=Bnk
   PRI:= Bnk
   SEC:= BLZ BnkAddr BnkPstCd
SJ:=Cst
   PRI:= Cst
   SEC:= CstName CstBDate CstPstCd_Caddr_Cocc_CstAmnt.
SJ:=_CAddr_
   PRI:= _CAddr_
   SEC:= CstPstCd CstStrt CstHs
SJ:=_COcc_
   PRI:= _COcc_
   SEC:= OccGroup ProfAge
SJ:=Datum9
   PRI:= Datum9
   SEC:= Datum6
SJ:=Datum6
   PRI:= Datum6
   SEC:= Datum4
SJ:=Datum4
   PRI:= Datum4
   SEC:=
SJ:=Dst
   PRI:= BnkPstCd CstPstCd
   SEC:= Distanz

Aus der obengenannten Datenfilestruktur werden dann die Dateihierarchien bzw. aus der obengenannten Geschäftsstruktur die Subjekthierarchien abgeleitet:
Dateihierarchien:
Ta
Dpt
Dst
Cst
Bnk
Subjekthierarchien:
TaX
WPNR
DptBnk
Cst
_COcc_
_Caddr_
Bnk
Datum9
Datum6
Datum4
Dst

Auf Basis der abgeleiteten Datei- und Subjekthierarchien und der Definition eines "perfect data warehouse" als "fully connected double directed acyclic graph" (siehe hierzu auch http://members.aol.com/fmcguff/dwmodel) wird nun die Verarbeitungslogik festgelegt.

Die Verarbeitungslogik kann für die Entwicklung des Datawarehouse in einem Programm, beispielsweise in einer 4GL-Programmiersprache, z.B. auf einer SAS-Plattform, implementiert werden.

Eine beispielhafte Implementierung eines Entwicklungsprogramms Epgm für das Datawarehouse sieht wie folgt aus:

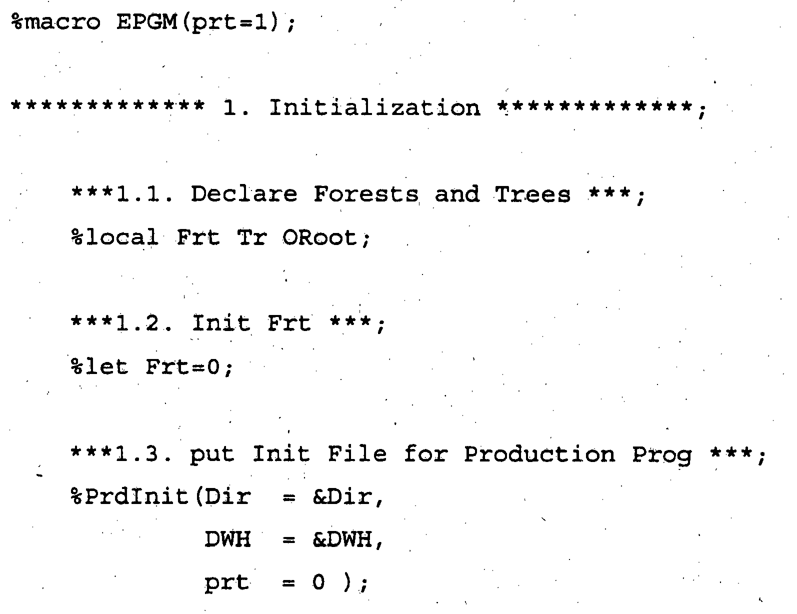

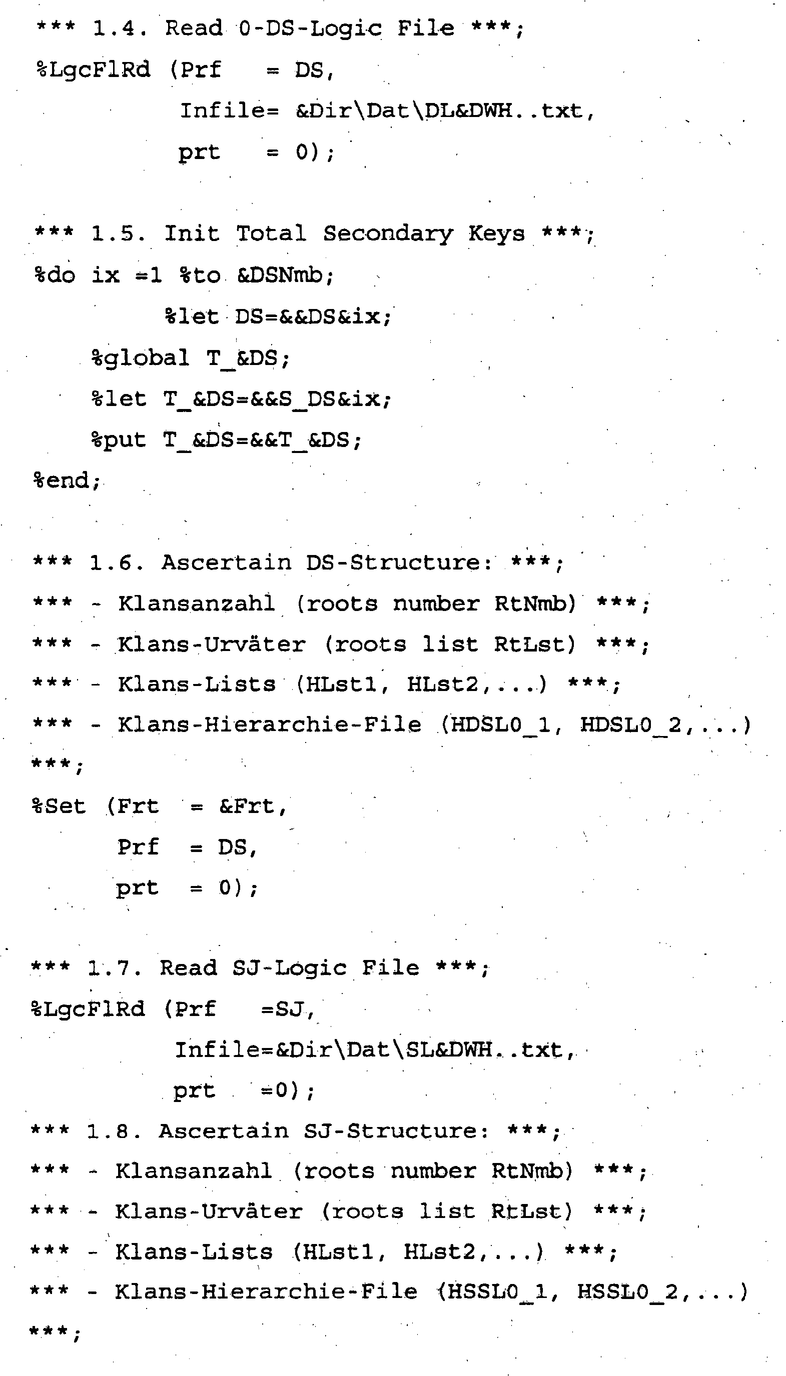

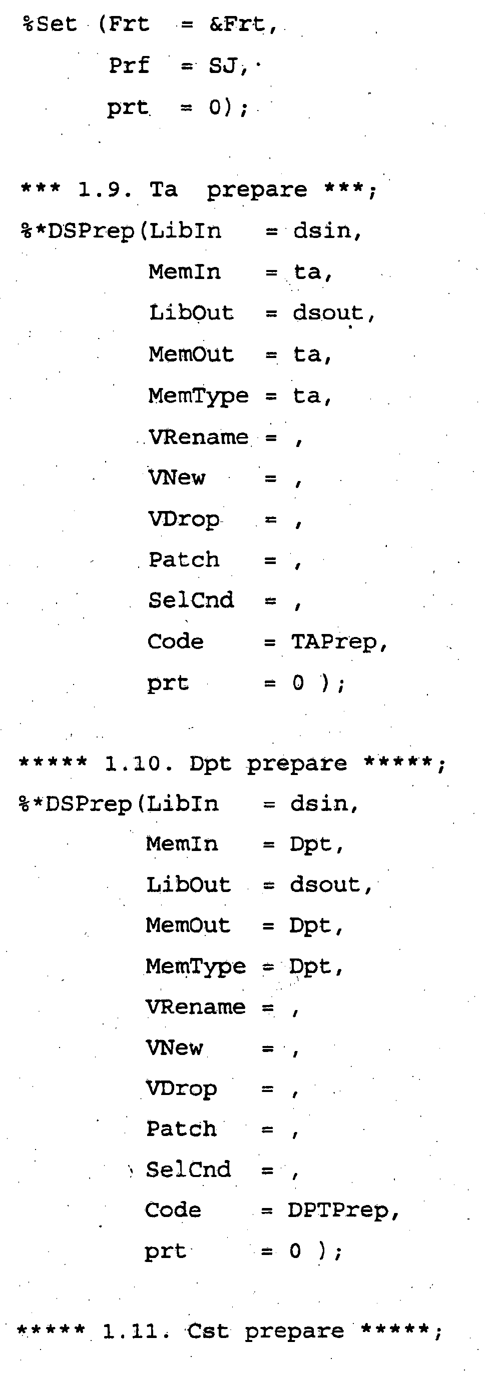

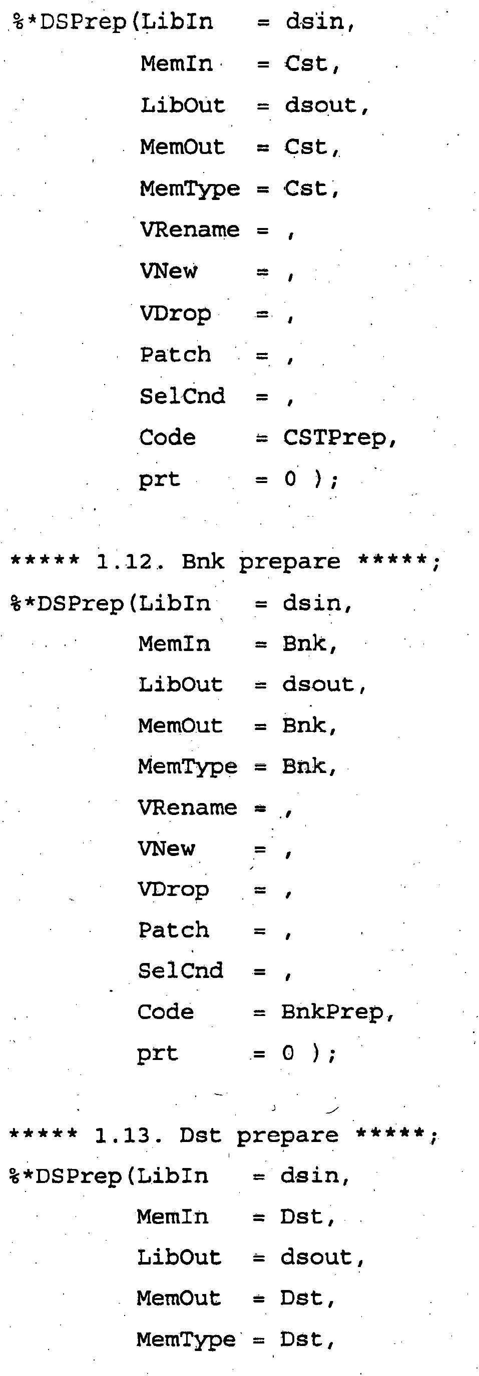

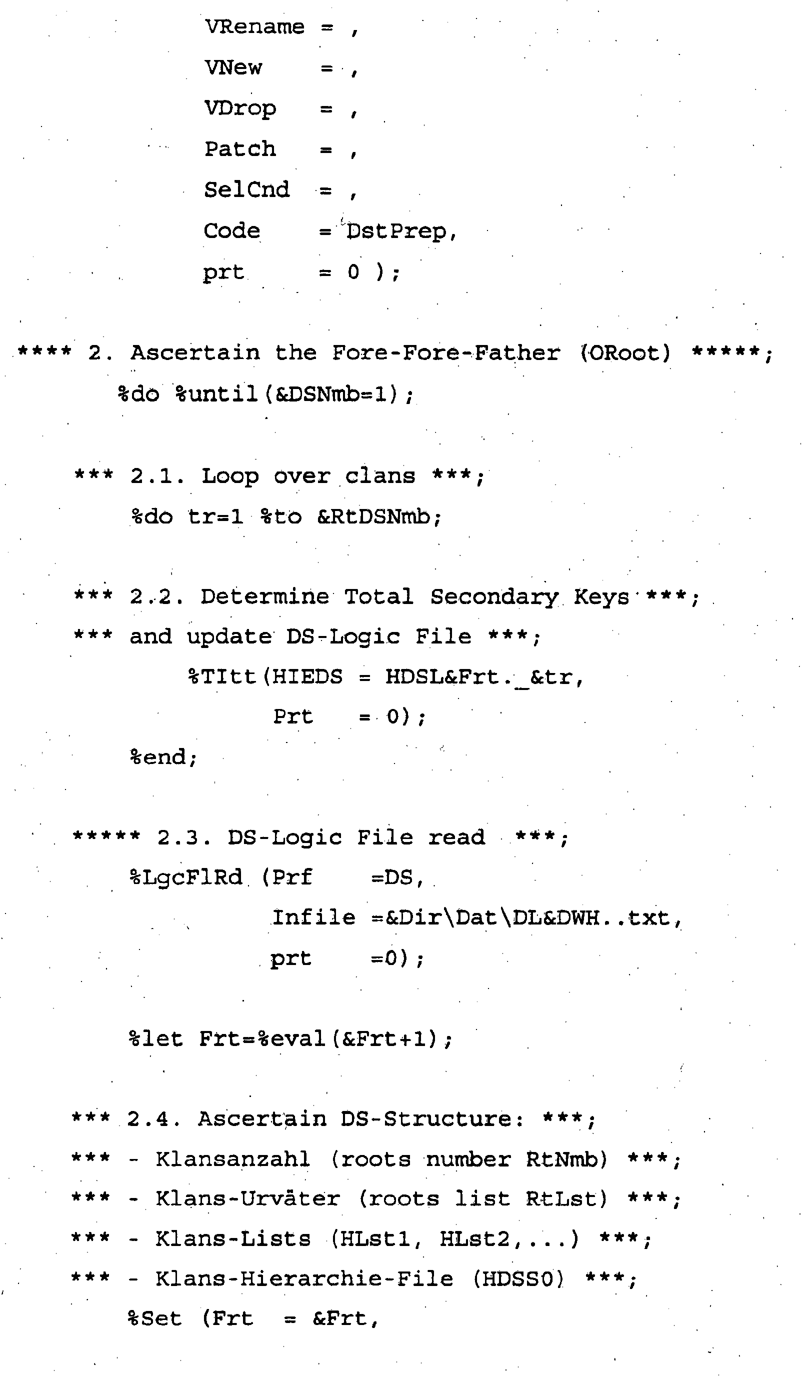

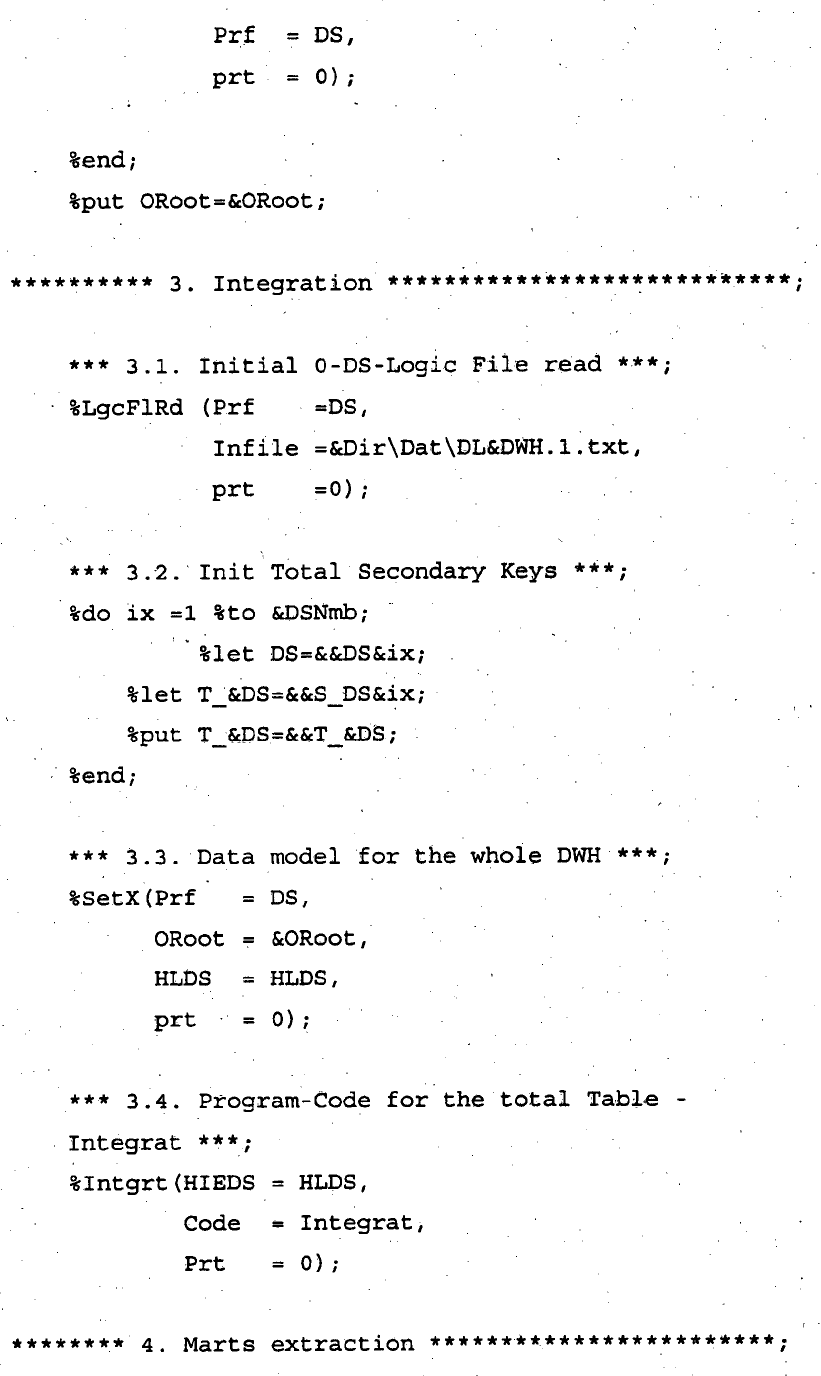

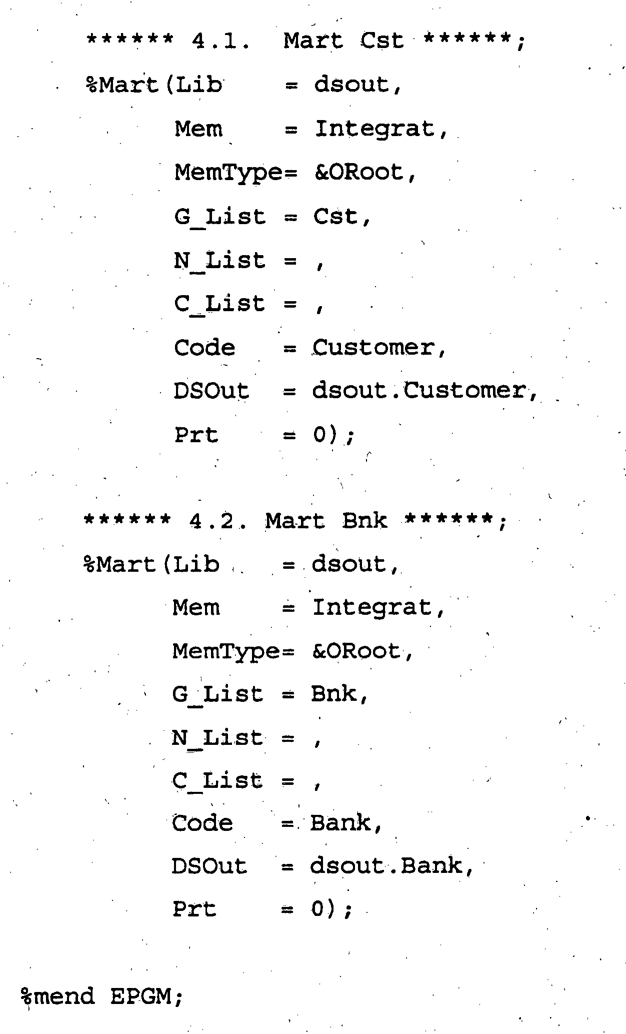

In einem ersten Initialisierungs-Teil (Abschnitt 1. im obigen Programmkode; alle folgenden Abschnitte beziehen sich auf den obigen Programmkode) werden Initial-Werte angelegt und unter anderem Variablen deklariert und initializiert (insbesondere Abschnitte 1.1, 1.2). Ferner wird ein Initial-file für das ProduktionsProgramm angelegt (Abschnitt 1.3). Anschließend wird ein Initial DS-Logik-File eingelesen und ausgewertet (Abschnitt 1.4):
DSNmb=5
DSLst=Dst Dpt Bnk Cst Ta
DS1=Dst
DS2=Dpt
DS3=Bnk
DS4=Cst
DS5=Ta

P_DS1=BNKPSTCD CSTPSTCD
S_DS1=DISTANZ
P_DS2=DPT BNK
S_DS2=CST DPDATE DPAMNT
P_DS3=BNK
S_DS3=BLZ BNKPSTCD BNKAMNT
P_DS4=CST
S_DS4=CSTNAME CSTBDATE CSTPSTCD CSTSTRT CSTHS OCCGROUP PROFAGE CSTAMNT
P_DS5=TA WPNR DPT BNK DATUM9
S_DS5=TAATT TAAMNT

Initial werden sog. Total Secondary Keys deklariert und angelegt (Abschnitt 1.5):
T_Dst=DISTANZ
T_Dpt=CST DPDATE DPAMNT
T_Bnk=BLZ BNKPSTCD BNKAMNT
T_Cst=CSTNAME CSTBDATE CSTPSTCD CSTSTRT CSTHS OCCGROUP PROFAGE CSTAMNT
T_Ta=TAATT TAAMNT

Zudem werden Initial DS-Struktur ausgewertet (Abschnitt 1.6.)

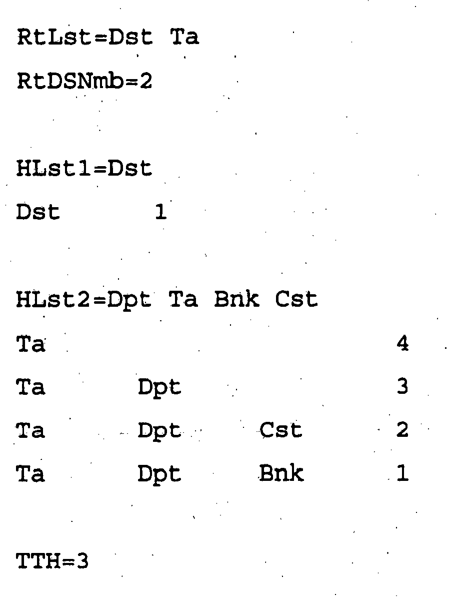

Dann wird ein SJ-Logik-File eingelesen und ausgewertet (Abschnitt 1.7) :
SJNmb=11

SJLst=TaX DptBnk WPNR Bnk Cst _CAddr_ _COcc_ Datum9 Datum6 Datum4 Dst
SJ1=TaX
SJ2=DptBnk
SJ3=WPNR
SJ4=Bnk
SJ5=Cst
SJ6=_CAddr_
SJ7=_COcc_
SJ8=Datum9
SJ9=Datum6
SJ10=Datum4
SJ11=Dst

P_SJ1=TA WPNR DPT BNK
S_SJ1=TAATT TAAMNT
P_SJ2=DPT BNK
S_SJ2=CST DPDATE DPAMOUNT
P_SJ3=WPNR
S_SJ3=WPNAME WPATT
P_SJ4=BNK
S_SJ4=BLZ BNKADDR BNKPSTCD
P_SJ5=CST
S_SJ5=CSTNAME CSTBDATE CSTPSTCD _CADDR_ _COCC_ CSTAMNT P_SJ6=_CADDR_
S_SJ6=CSTPSTCD CSTSTRT CSTHS
P_SJ7=_COCC_
S_SJ7=OCCGROUP PROFAGE
P_SJ8=DATUM9
S_SJ8=DATUM6
P_SJ9=DATUM6
S_SJ9=DATUM4
P_SJ10=DATUM4
S_SJ10=
P_SJ11=BNKPSTCD CSTPSTCD
S_SJ11=DISTANZ

Im Abschnitt 1.8. wird die SJ-Struktur ausgewertet:

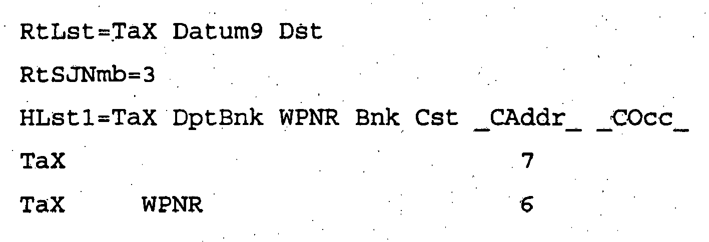

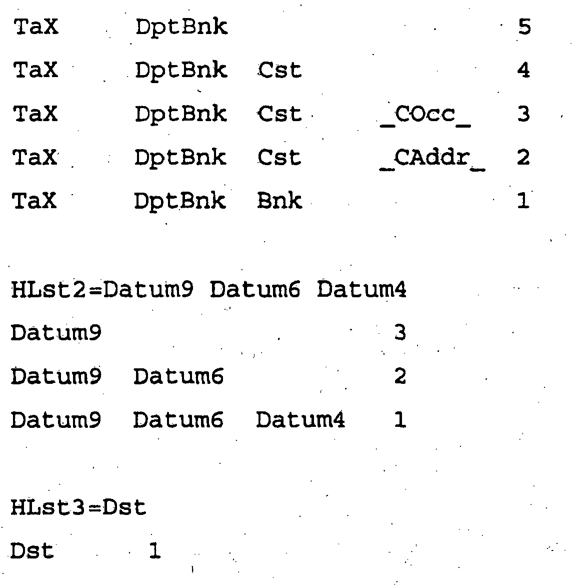

In den Abschnitten 1.9 bis 1.13 werden Input-Tabellen vorbereitet.

In den Abschnitten 2., 2.1, 2.2, 2.3, 2.4 wird der Ur-Ur-Vater festgestellt.

### ORoot=Ta

Das Datenmodel für das gesamten Data Warehouse ergibt sich zu:

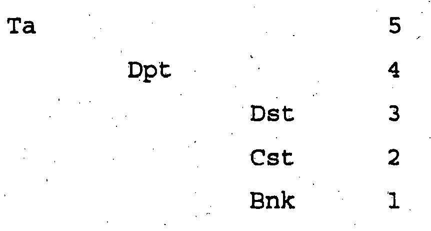

In den Abschnitten 3., 3.1., 3.2., 3.4. wird der Programm-Code für das Zusammensetzen aller Input-Tabellen erstellt und ausgeführt.

Schließlich wird in den Abschnitten 4., 4.1., 4.2. der Programm-Code für die Data Mart-Extraktion erstellt und ausgeführt.

Das Entwicklungsprogramm Epgm erwartet auf der Eingabeseite die Eingabedateien bzw. Input-Tabellen in einem internen (SAS-) Format wie folgt:

### Input

* BNK: input Bnk $ BLZ $ BNKPSTCD $ BnkAmnt;
   Bnk1 BPLZ1 BPCD1 1.1
   Bnk2 BBLZ2 BPCD2 2.2
* CST: input Cst $ CstName $ CstBDate date9. CstAmnt CstPstCd $ CstStrt $ CstHs $ OccGroup $ ProfAge; CstO1 CstNamel 30oct1949 1 CPCdl Streetl HNr1 OcGroup1 5
   Cst02 CstName2 31oct1922 2 CPCd2 Street2 HNr2 OcGroup2 10
   Cst03 CstName3 21nov1921 3 CPCd3 Street3 HNr3 OcGroup3 15
* DPT: input Dpt $ Bnk $ Cst $ DpDate date9.DPAmnt;
   Dpt1 Bnk1 Cst01 20apr1999 1000.
   Dpt2 Bnk2 Cst01 21may2000 2000.
   Dpt3 Bnk1 Cst02 22Jun2001 3000.
   Dpt4 Bnk1 Cst03 23Jul2001 4000.
* DST: input BnkPstCd $ CstPstCd $ Distanz ;
   BPCD1 CPCD1 11.
   BPCD1 CPCD2 12.
   BPCD1 CPCD3 13.
   BPCD2 CPCD1 21.
   BPCD2 CPCD2 22.
   BPCD2 CPCD3 23.
* TA: input Ta $ WPNr $ Dpt $ Bnk $ Datum9 $ TaAmnt TaAtt $;
   Ta01 WPNr011 Dpt1 Bnk1 01Feb2001 100.00 TaAtt01
   Ta02 WPNr011 Dpt1 Bnk1 15Feb2001 50.00 TaAtt01
   Ta03 WPNr022 Dpt1 Bnk1 01Apr2001 100.00 TaAtt01
   Ta01 WPNr011 Dpt2 Bnk2 01Feb2001 200.00 TaAtt01
   Ta02 WPNr022 Dpt2 Bnk2 01Apr2001 200.00 TaAtt01
   Ta01 WPNr011 Dpt3 Bnk1 01Feb2001 220.00 TaAtt01
   Ta01 WPNr021 Dpt4 Bnk1 01Feb2001 330.00 TaAtt01

Ferner erwartet das Entwicklungsprogramm Epgm die oben erwähnte Datenfilestruktur und Geschäftsstruktur im txt-Format.

Das Entwicklungsprogramm Epgm ergibt ein Produktionsprogramm für das Datawarehouse PPgm, das ein Steuerungsprogramm PrdStrg, Vorverarbeitungsmodule TAPREP und Aggregierungsmodule CUSTOMER sowie ein Integrationsmodul INTEGRAT umfasst. Ferner führt es das Produktionsprogramm PPgm aus. Implementierungen des Steuerungsprogramms PrdStrg, der Vorverarbeitungsmodule TAPREP und Aggregierungsmodule CUSTOMER sowie des Integrationsmoduls INTEGRAT sind im folgenden angegeben:

### Steuerungsprogramm PrdStrg:

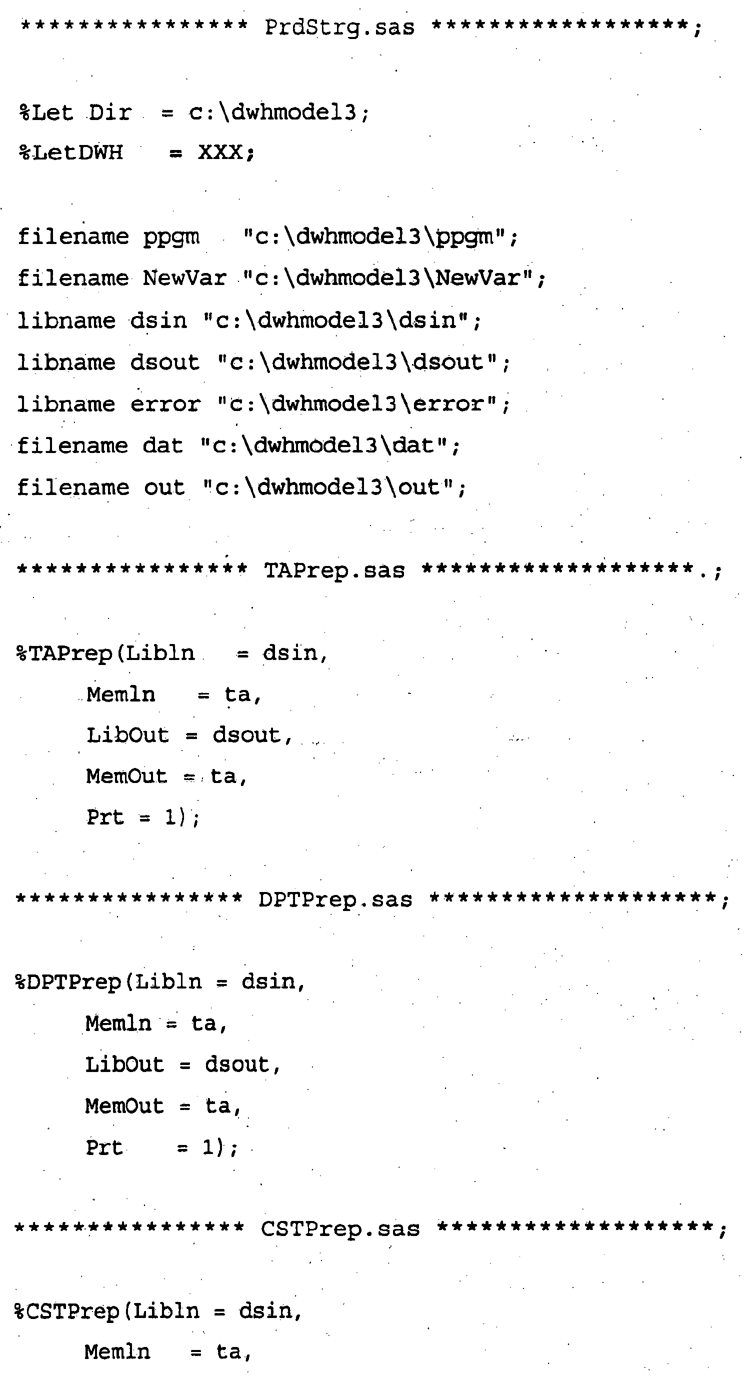

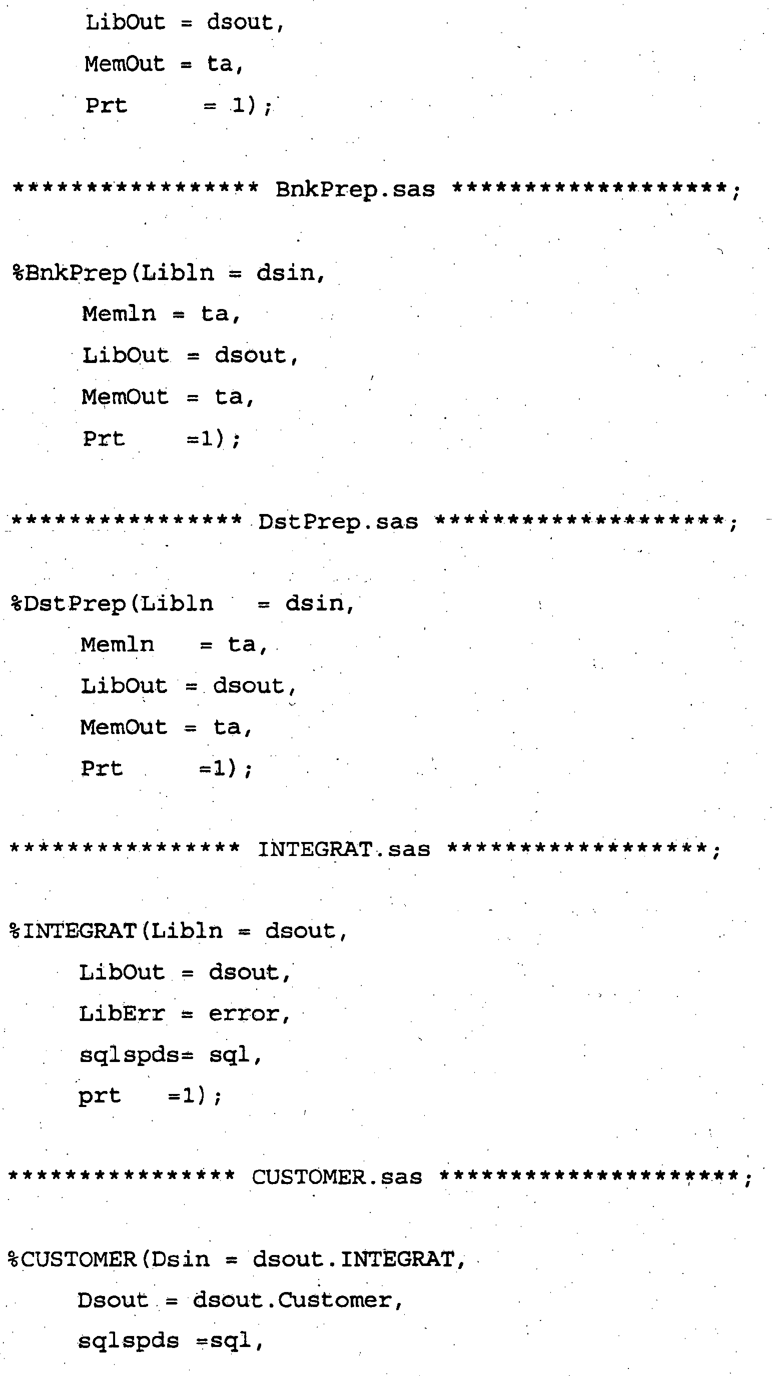

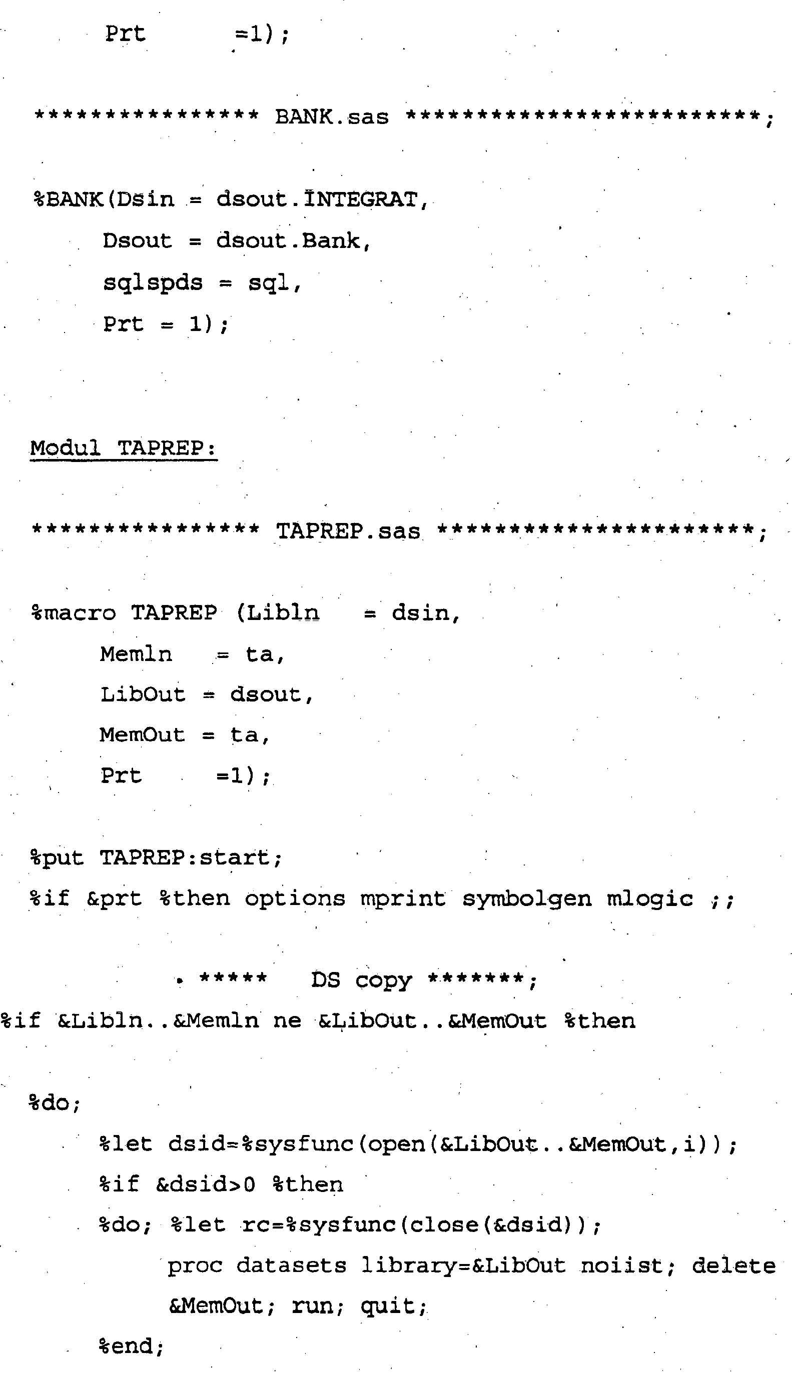

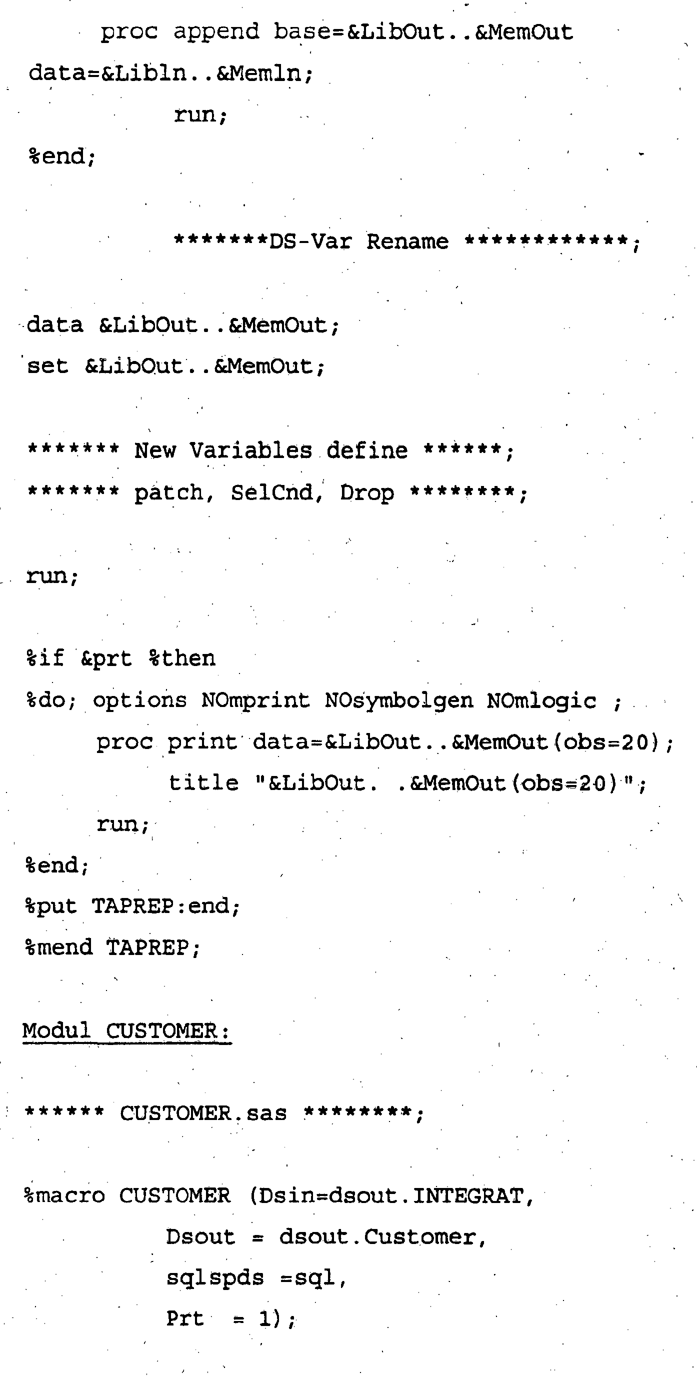

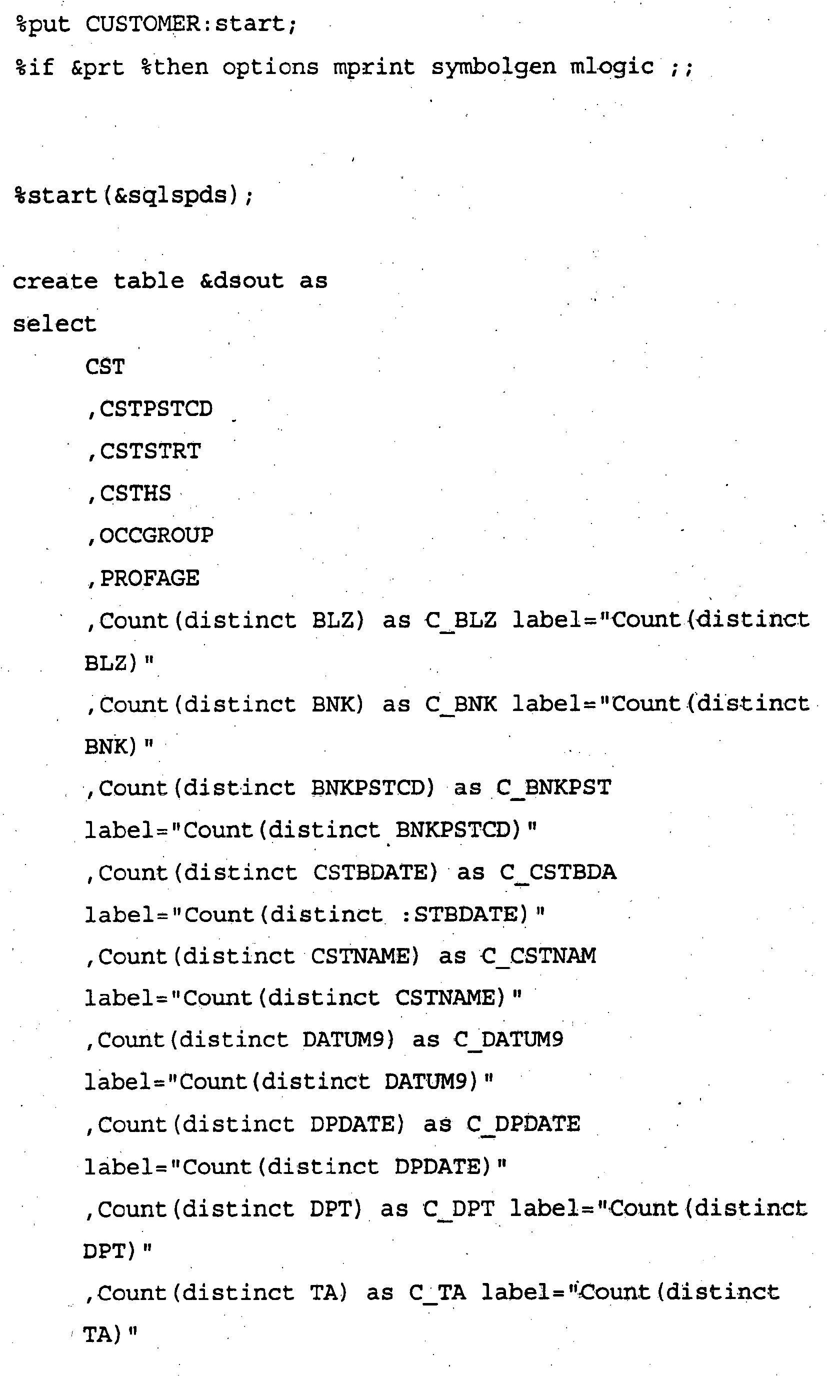

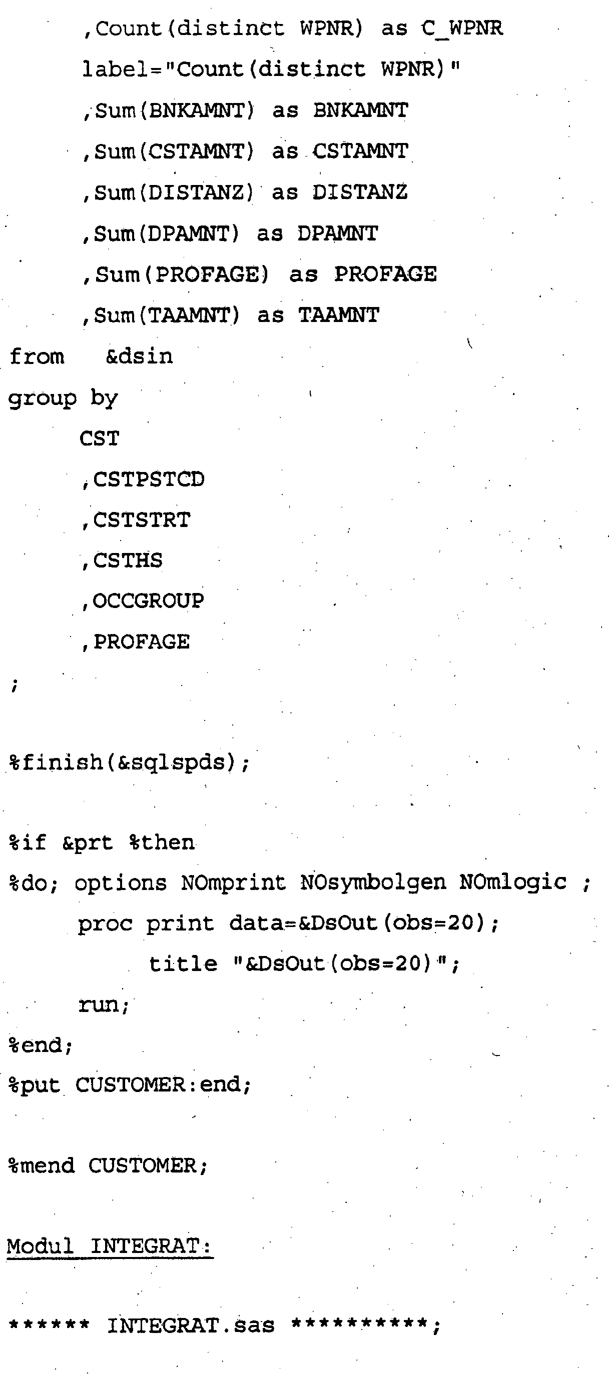

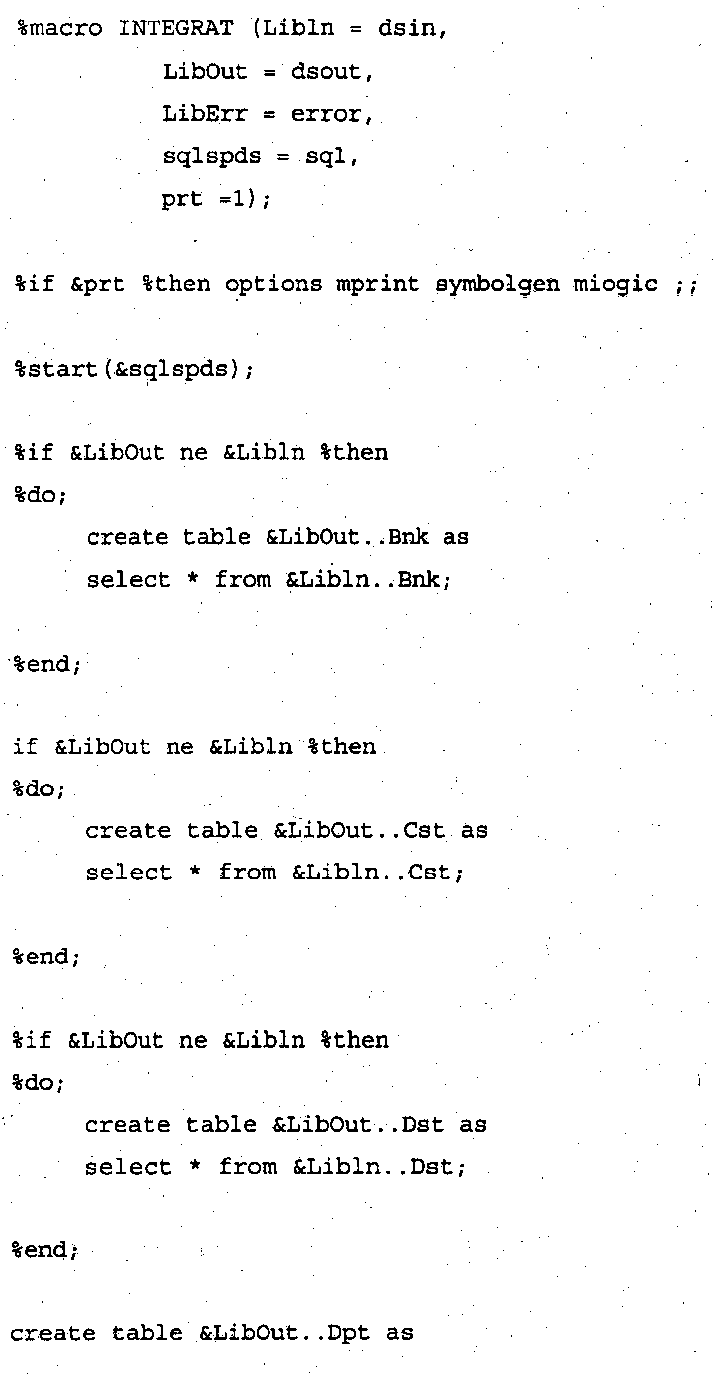

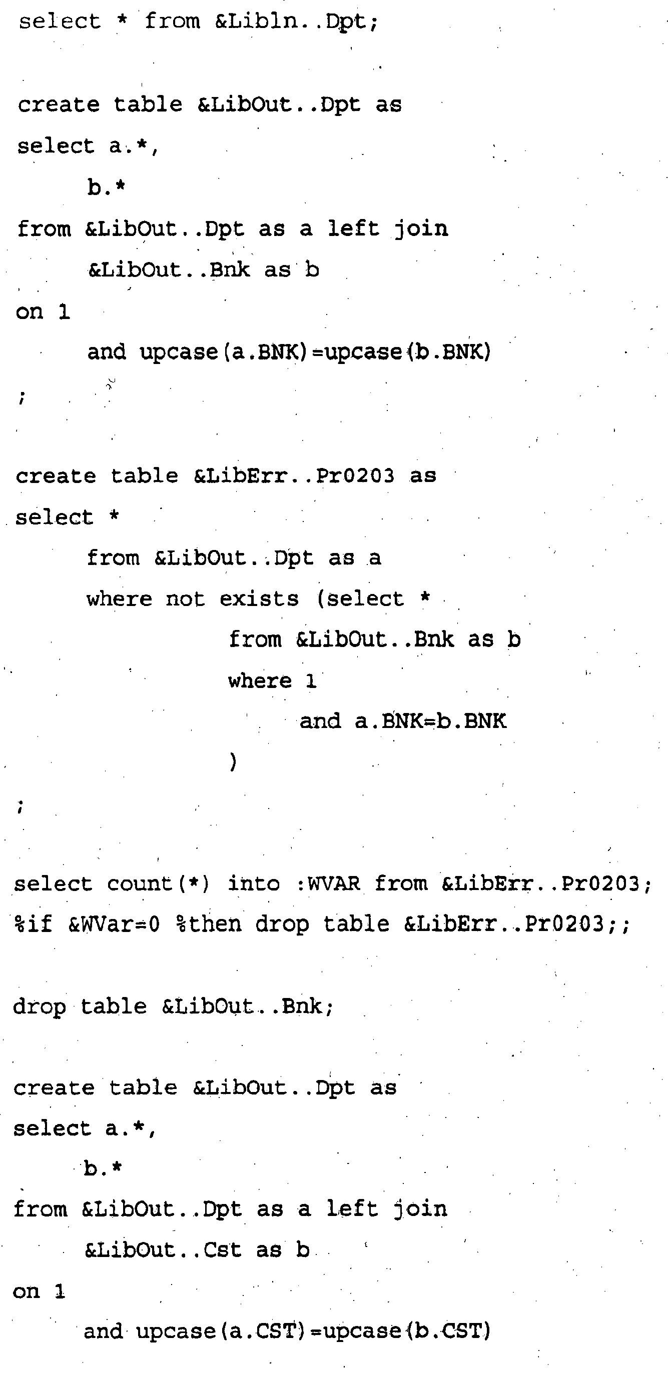

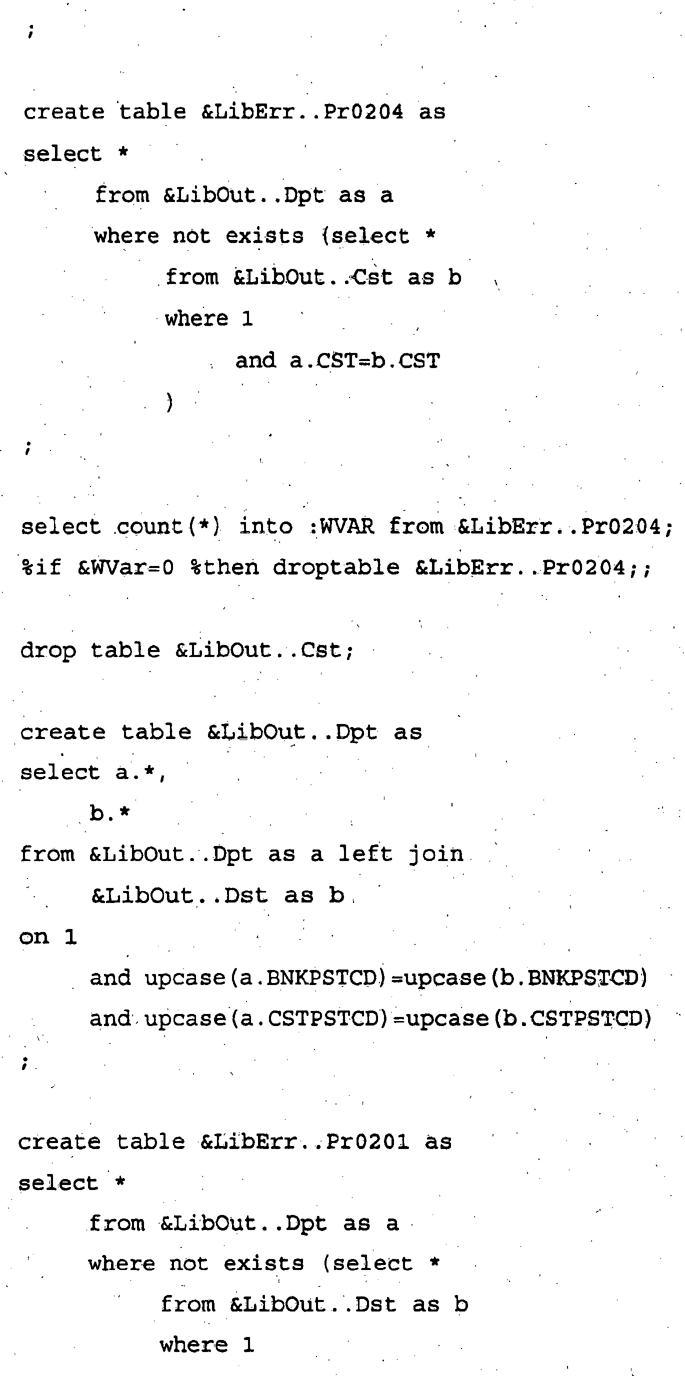

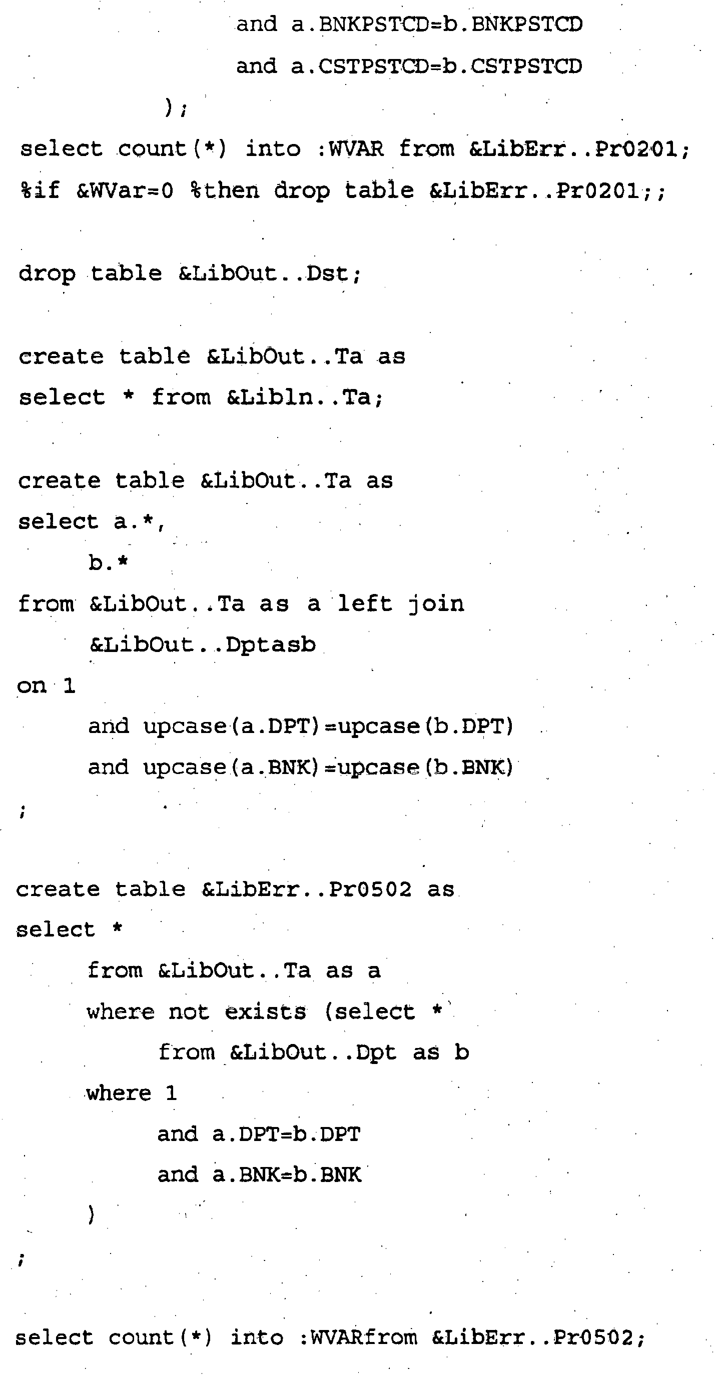

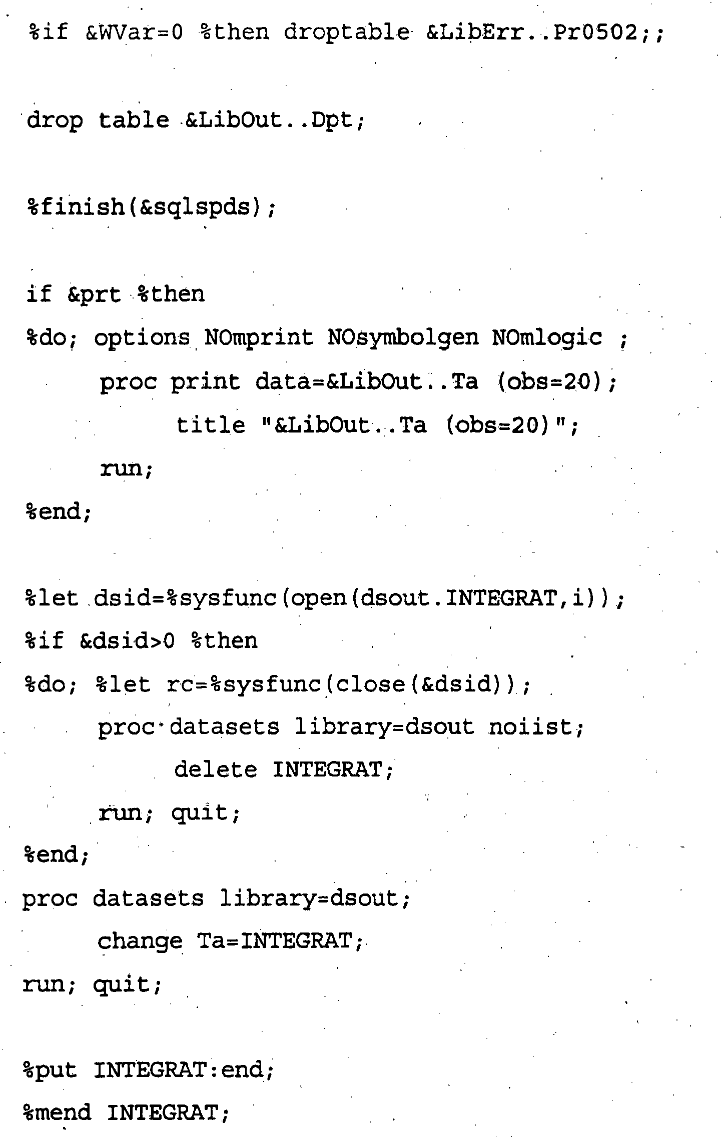

Die Erfindung zeichnet sich dadurch aus, dass ein Entity-Relationship-Generator und ein Programmkode-Generator vorgesehen sind. Der Entity-Relationship-Generator erstellt basierend auf der relationalen Struktur von Eingabedaten für das Datawarehouse ein logisches Datenmodell des Datawarehouse, der Programmkode-Generator fasst basierend auf dem logischen Datenmodell in einer Gesamttabelle alle Eingabedaten zusammen; schließlich wird die Gesamttabelle in einzelne Tabellen zu Data Marts unterteilt und/oder verdichtet. Hierdurch wird eine schnelle, sichere und vollautomatische Erstellung eines Datawarehouse ermöglicht.

### BEZUGSZEICHENLISTE

- 10: Entity-Relationship-Generator
- 12: Programmkode-Generator
- 14: erste Datei mit Eingabedaten
- 16: zweite Datei mit Eingabedaten
- 18: dritte Datei mit Eingabedaten
- 20: logisches Datenmodell
- 22: Gesamttabelle
- 24: erste Tabelle bzw. erstes Data Mart
- 26: zweite Tabelle bzw. zweites Data Mart
- 28: dritte Tabelle bzw. drittes Data Mart
- 30: Mittel zum Unterteilen der Gesamttabelle

## Patentansprüche

1. Verfahren zum automatischen Erstellen eines Datawarehouse mit einem Entity-Relationship-Generator (10) und einem Programmkode-Generator (12), wobei
der Entity-Relationship-Generator (10) basierend auf der relationalen Struktur von Eingabedaten (14, 16, 18) für das Datawarehouse ein logisches Datenmodell (20) des Datawarehouse erstellt, der Programmkode-Generator (12) basierend auf dem logischen Datenmodell (20) in einer Gesamttabelle (22) alle Eingabedaten zusammenfasst und anschliessend die Gesamttabelle (22) in einzelne Tabellen (24, 26, 28) zu Data Marts unterteilt und/oder verdichtet wird, wobei zum Erstellen des logischen Datenmodells (20) Einheiten bzw. Entities von allgemeinen Typen, insbesondere von Datentabellen, durch zwei Schlüssel-Listen charakterisiert werden, wobei eine erste Schlüssel-Liste primäre Schlüssel in einer Tabelle und eine zweite Schlüssel-Liste alle Schlüssel, die nicht primäre Schlüssel sind, umfasst, wobei
die Einheiten in einem statischen binären Verhältnis vom Typ "Vater-Sohn", auch "partial order relationship" genannt, zueinander stehen, wobei gilt, dass eine erste Einheit E1 zu einer zweiten Einheit E2 in einem statischen Verhältnis vom Typ "Vater-Sohn" nur dann steht, wenn (P1, S1)>P2 gilt, d.h. die Gesamtliste der Schlüssel der ersten Einheit E1, welche die Liste aller primären Schlüssel P1 und aller sekundären Schlüssel S1 der ersten Einheit E1 aufweist, alle primären Schlüssel P2 der zweiten Einheit E2 umfasst, oder wobei
die Einheiten in einem dynamischen binären Verhältnis vom Typ "Vater-Sohn", auch "dynamical partial order relationship" genannt, zueinander stehen, wobei gilt, dass eine erste Einheit E1 zu einer zweiten Einheit E2 in einem dynamischen Verhältnis vom Typ "Vater-Sohn" nur dann steht, wenn (P1, Sd1)>P2 gilt, d.h. die Gesamtliste der Schlüssel der ersten Einheit E1, welche die Liste aller primären Schlüssel P1 der ersten Einheit E1 und die Liste aller zu einem bestimmten Zeitpunkt ermittelten "Nachfahren" Sd1 der ersten Einheit E1 aufweist, alle primären Schlüssel P2 der zweiten Einheit E2 umfasst, wobei
alle Einheiten in mehrere disjunkte, als Klane bezeichnete Gruppen des Verwandtschafts-Verhältnisses vom Typ "Vater-Sohn" unterteilt werden, wobei für jede Gruppe eine baumartige, hierarchische Struktur aufgebaut wird und am Anfang jeder Hierarchie bzw. an der Wurzel jedes Baumes der Urvater des jeweiligen Klanes steht, wobei
jeweils einem Klan eine erste und eine zweite Schlüssel-Liste zugeordnet werden, wobei die erste Schlüssel-Liste des Klanes die erste Schlüssel-Liste des Urvaters des Klanes ist und die zweite Schlüssel-Liste des Klanes die Liste aller Schlüssel des Klanes ist, die nicht in der ersten Schlüssel-Liste des Klanes stehen, und wobei
der Urvater aller Eingabedaten durch Iteration der vorstehenden Verfahrensschritte ermittelt wird.

2. Vorrichtung zum automatischen Erstellen eines Datawarehouse, umfassend:
einen Entity-Relationship-Generator (10), der basierend auf der relationalen Struktur von Eingabedaten (14, 16, 18) für das Datawarehouse ein logisches Datenmodell (20) des Datawarehouse erstellt;
einen Programmkode-Generator (12), der basierend auf dem logischen Datenmodell (20) in einer Gesamttabelle (22) alle Eingabedaten zusammenfasst, und Mittel (30), welche die Gesamttabelle (22) in einzelne Tabellen (24, 26, 28) zu Data Marts unterteilen und/oder verdichten;
Mittel zum Erstellen des logischen Datenmodells (20) Einheiten bzw. Entities von allgemeinen Typen, insbesondere von Datentabellen, durch zwei Schlüssel-Listen charakterisiert werden,
wobei eine erste Schlüssel-Liste primäre Schlüssel in einer Tabelle und eine zweite Schlüssel-Liste alle Schlüssel, die nicht primäre Schlüssel sind; wobei
die Einheiten in einem statischen binären Verhältnis vom Typ "Vater-Sohn", auch "partial order
relationship" genannt, zueinander stehen, wobei gilt, dass eine erste Einheit E1 zu einer zweiten Einheit E2 in einem statischen Verhältnis vom Typ "Vater-Sohn" nur dann steht, wenn (P1,
S1)>P2 gilt, d.h. die Gesamtliste der Schlüssel der ersten Einheit E1, welche die Liste aller primären Schlüssel P1 und aller sekundären Schlüssel S1 der ersten Einheit E1 aufweist, alle primären Schlüssel P2 der zweiten Einheit E2 umfasst, oder wobei die Einheiten in einem dynamischen binären Verhältnis vom Typ "Vater-Sohn", auch "dynamical partial order relationship" genannt, zueinander stehen, wobei gilt, dass eine erste Einheit E1 zu einer zweiten Einheit E2 in einem dynamischen Verhältnis vom Typ "Vater-Sohn" nur dann steht,
wenn (P1, Sd1)>P2 gilt, d.h. die Gesamtliste der Schlüssel der ersten Einheit E1, welche die Liste aller primären Schlüssel P1 der ersten Einheit E1 und die Liste aller zu einem bestimmten Zeitpunkt ermittelten "Nachfahren" Sd1 der ersten Einheit E1 aufweist, alle primären Schlüssel P2 der zweiten Einheit E2 umfasst;
Mittel, durch die alle Einheiten in mehrere disjunkte, als Klane bezeichnete Gruppen des Verwandtschafts-Verhältnisses vom Typ "Vater-Sohn" unterteilt werden, wobei für jede Gruppe eine baumartige, hierarchische Struktur aufgebaut wird und am Anfang jeder Hierarchie bzw. an der Wurzel jedes Baumes der Urvater des jeweiligen Klanes steht;
Mitttel, durch die jeweils einem Klan eine erste und eine zweite Schlüssel-Liste zugeordnet wird, wobei die erste Schlüssel-Liste des Klanes die erste Schlüssel-Liste des Urvaters des Klanes ist und die zweite Schlüssel-Liste des Klanes die Liste aller Schlüssel des Klanes ist, die nicht in der ersten Schlüssel-Liste des Klanes stehen, wobei
der Urvater aller Eingabedaten durch Iteration des Betriebs der vorstehenden Generatoren bzw. Mittel ermittelt wird.

3. Vorrichtung nach Anspruch 2, **dadurch gekennzeichnet, dass** sie in einem Programm implementiert ist, das in einer 4GL-Programmiersprache geschrieben ist, insbesondere auf einer SAS-Plattform.

4. Vorrichtung nach Anspruch 3, **dadurch gekennzeichnet, dass** das Programm zum Verarbeiten von Dateien von Eingabedaten in einem internen Format, insbesondere einem SAS-Format, ausgebildet ist.

5. Vorrichtung nach Anspruch 2, **dadurch gekennzeichnet, dass** das Programm zum Verarbeiten einer Datenfilestruktur und/oder einer Subjektlogik im TXT-Format ausgebildet ist.

6. Vorrichtung nach einem der Ansprüche 3 bis 5, **dadurch gekennzeichnet, dass** Programm zum Ausführen eines Produktionsprogramms für das Datawarehouse ausgebildet ist.

7. Vorrichtung nach Anspruch 6, **dadurch gekennzeichnet, dass** das Produktionsprogramm ein Steuerungsprogramm, Vorverarbeitungsmodule, Aggregierungsmodule und ein Integrationsmodul umfasst.

## Claims

1. A method for the automatic generation of a data warehouse comprising an entity relationship generator (10) and a program code generator (12) wherein
said entity relationship generator (10) generates a logical data model (20) of the data warehouse based on the relational structure of input data (14, 16, 18) for said data warehouse,
on the basis of said logical data model (20), said program code generator (12) compiles all input data into an overall table (22) and subsequently subdivides and/or compresses said overall table (22) into single tables (24, 26, 28) to give data marts, wherein - for the purpose of generating a logical data model (20) - entities of general types, in particular of data tables, are **characterized by** two key lists, a first key list of which comprises primary keys in a table and a second key list comprises all keys which are not primary keys, wherein
said entities are in a static binary relationship of the "father-son" type, also referred to as a "partial order relationship", for which it holds that a first entity E1 will only be in a static relationship of the "father-son" type with regard to a second entity E2 if (P1, Sl)>P2, i.e. the overall list of keys of the first entity E1, which includes the list of all primary keys P1 and all secondary keys S1 of said first entity E1, comprises all primary keys P2 of the second entity E2, or wherein
said entities are in a dynamic binary relationship of the "father-son" type, also referred to as a "dynamic partial order relationship", for which it holds that a first entity E1 will only be in a dynamic relationship of the "father-son" type with regard to a second entity E2 if (P1, Sd1)>P2, i.e. the overall list of keys of the first entity E1, which includes the list of all primary keys P1 of the first entity E1 and the list of all "successors" Sd1 of the first entity E1 determined at a certain time, comprises all primary keys P2 of the second entity E2, wherein
all entities are subdivided into a plurality of disjoint groups, referred to as "clans", of the "father-son" relationship type, where for each group, a tree-like hierarchical structure is established, and at the beginning of each hierarchy and/or at the root of each tree there is the originator of the respective clan, wherein
each clan is allocated a first and a second list of keys, said first list of keys of the clan being the first list of keys of the clan originator and said second list of keys of the clan being the list of all keys of the clan which are not included in the first list of keys of the clan, and wherein the originator of all input data is determined through iteration of the previous procedural steps.

2. An apparatus for the automatic generation of a data warehouse, comprising
an entity relationship generator (10) which generates a logical data model (20) of the data warehouse based on the relational structure of input data (14, 16, 18) for said data warehouse;
a program code generator (12) which, on the basis of said logical data model(20), compiles all input data into a overall table (22), and means (30) which subdivide and/or compress said overall table (22) into single tables (24, 26, 28) to give data marts;
means for generating said logical data model (20);
entities of general types, in particular of data tables, which are **characterized by** two key lists, a first key list of which comprises primary keys in a table and a second key list comprises all keys which are not primary keys; wherein
said entities are in a static binary relationship of the "father-son" type, also referred to as a "partial order relationship", for which it holds that a first entity E1 will only be in a static relationship of the "father-son" type with regard to a second entity E2 if (P1, Sl)>P2, i.e. the overall list of keys of the first entity E1 which includes the list of all primary keys P1 and all secondary keys S1 of said first entity E1, comprises all primary keys P2 of the second entity E2, or wherein
the entities are in a dynamic binary relationship of the "father-son" type, also referred to as a "dynamic partial order relationship", for which it holds that a first entity E1 will only be in a dynamic relationship of the "father-son" type with regard to a second entity E2 if (P1, Sd1)>P2, i.e. the overall list of keys of the first entity E1, which includes the list of all primary keys P1 of the first entity E1 and the list of all "successors" Sd1 of the first entity E1 determined at a certain time, comprises all primary keys P2 of the second entity E2;
means through which all entities are subdivided into a plurality of disjoint groups, referred to as "clans", of the "father-son" relationship type, where for each group, a tree-like hierarchical structure is established and at the beginning of each hierarchy and/or at the root of each tree there is the originator of the respective clan;
means through which each clan is allocated a first and a second list of keys, said first list of keys of the clan being the first list of keys of the clan originator and said second list of keys of the clan being the list of all keys of the clan which are not included in the first list of keys of the clan; wherein
the originator of all input data is determined through iteration of the previous procedural steps.

3. The apparatus as claimed in claim 2 **characterized in that** it is implemented in a software program which has been written in a 4GL programming language, in particular on an SAS platform.

4. The apparatus as claimed in claim 3 **characterized in that** the software program for processing input data files is in an internal format, in particular an SAS format.

5. The apparatus as claimed in claim 2 **characterized in that** the software program for processing a data file structure and/or a subject logic is in the TXT format.

6. The apparatus as claimed in one of claims 3 to 5 **characterized in that** said software program is designed for executing a production program for said data warehouse.

7. The apparatus as claimed in claim 6 **characterized in that** said production program comprises a control program, pre-processing modules, aggregation modules and an integration module.

## Revendications

1. Procédé pour la génération automatique d'un datawarehouse avec un générateur d'entité-association (10) et un générateur de code source (12),
le générateur d'entité-association (10) générant un modèle de données logique (20) du datawarehouse sur la base de la structure relationnelle de données d'entrée (14, 16, 18) pour le datawarehouse, le générateur de code source (12) regroupant toutes les données d'entrée dans un tableau d'ensemble (22) sur la base du modèle de données logique (20) et, finalement, le tableau d'ensemble (22) étant divisé ou comprimé en des tableaux individuels (24, 26, 28) de datamarts, où, pour la génération du modèle de données logique (20), des unités ou entités de types généraux, particulièrement de tableaux de données, sont **caractérisées par** deux nomenclatures de clés, une première nomenclature de clés comprenant un tableau de clés primaires et une deuxième nomenclature de clés comprenant toutes les clés n'étant pas des clés primaires,
les unités étant engagées l'une à l'autre dans un rapport binaire statique de type « père-fils », également nommé « partial order relationship », dans lequel une première unité E1 est engagée dans un rapport statique de type « père-fils » à une seconde unité E2 si et seulement si (P1, S1)>P2 s'applique, c.-à-d. que l'ensemble de la nomenclature de la clé de la première unité E1, laquelle présente la nomenclature de toutes les clés primaires P1 et de toutes les clés secondaires S1 de la première unité E1, comprend toutes les clés primaires P2 de la seconde unité E2, ou
les unités étant engagées l'une à l'autre dans un rapport binaire dynamique de type « père-fils », également nommé « dynamical partial order relationship », dans lequel une première unité E1 est engagée dans un rapport dynamique de type « père-fils » à une seconde unité E2 si et seulement si (P1, Sd1)>P2 s'applique, c.-à-d. que l'ensemble de la nomenclature de la clé de la première unité E1, laquelle présente la nomenclature de toutes les clés primaires P1 de la première unité E1 ainsi que la liste de tous les « descendants » Sd1 de la première unité E1 calculés à un moment précis, comprend toutes les clés primaires P2 de la seconde unité E2, toutes les unités étant subdivisées en groupes disjoints de parenté de type « père-fils », désignés en tant que clans, chaque groupe se voyant attribuer une structure hiérarchique en arbre, l'ancêtre de chaque clan respectif apparaissant au début de toute hiérarchie ou à la racine de chaque arbre,
chaque clan se voyant attribuer une première et une deuxième nomenclature de clés, où la première nomenclature de clé du clan est la première nomenclature de clés de l'ancêtre du clan et la deuxième nomenclature de clés du clan est la liste de toutes les clés du clan n'apparaissant pas dans la première nomenclature de clés du clan, et où l'ancêtre de toutes les données d'entrée est calculé par itération de l'étape de procédé précédente.

2. Dispositif pour la génération automatique d'un datawarehouse comprenant :
un générateur d'entité-association (10) générant un modèle de données logique (20) du datawarehouse sur la base de la structure relationnelle de données d'entrée (14, 16, 18) pour le datawarehouse;
un générateur de code source (12) regroupant toutes les données d'entrée dans un tableau d'ensemble (22) sur la base du modèle de données logique (20), et les moyens (30) par lesquels le tableau d'ensemble (22) est divisé ou comprimé en des tableaux individuels (24, 26, 28) de datamarts;
Moyen de génération des unités ou entités de types généraux du modèle de données logiques (20), particulièrement de tableaux de données **caractérisées par** deux nomenclatures de clés, une première nomenclature de clés comprenant un tableau de clés primaires et une deuxième nomenclature de clés comprenant toutes les clés n'étant pas des clés primaires,
les unités étant engagées l'une à l'autre dans un rapport binaire statique de type « père-fils », également nommé « partial order relationship », dans lequel une première unité E1 est engagée dans un rapport statique de type « père-fils » à une seconde unité E2 si et
seulement si (P1, S1)>P2 s'applique, c.-à-d. que l'ensemble de la nomenclature de la clé de la première unité E1, laquelle présente la nomenclature de toutes les clés primaires P1 et de toutes les clés secondaires S1 de la première unité E1, comprend toutes les clés primaires P2 de la seconde unité E2, ou
les unités étant engagées l'une à l'autre dans un rapport binaire dynamique de type « père-fils », également nommé « dynamical partial order relationship », dans lequel une première unité E1 est engagée dans un rapport dynamique de type « père-fils » à une seconde unité E2 si et seulement si (P1, Sd1)>P2 s'applique, c.-à-d. que l'ensemble de la nomenclature de la clé de la première unité E1, laquelle présente la nomenclature de toutes les clés primaires P1 de la première unité E1 ainsi que la liste de tous les « descendants » Sd1 de la première unité E1 calculés à un moment précis, comprend toutes les clés primaires P2 de la seconde unité E2, Moyen par lequel toutes les unités sont subdivisées en groupes disjoints de parenté de type « père-fils », désignés en tant que clans, chaque groupe se voyant attribuer une structure hiérarchique en arbre, l'ancêtre de chaque clan respectif apparaissant au début de toute hiérarchie ou à la racine de chaque arbre,
Moyen par lequel chaque clan se voit attribuer une première et une deuxième nomenclature de clés, où la première nomenclature de clé du clan est la première nomenclature de clés de l'ancêtre du clan et la deuxième nomenclature de clés du clan est la liste de toutes les clés du clan n'apparaissant pas dans la première nomenclature de clés du clan,
l'ancêtre de toutes les données d'entrée étant calculé par itération de l'opération du générateurs ou du moyen précédent.

3. Dispositif selon la revendication 2, **caractérisé en ce qu'**il est implémenté dans un programme écrit dans un langage de programmation 4GL, plus particulièrement sur une plateforme SAS.

4. Dispositif selon la revendication 3, **caractérisé en ce que** le programme de traitement de fichiers de données d'entrée est formé en un format interne, plus particulièrement un format SAS.

5. Dispositif selon la revendication 2, **caractérisé en ce que** le programme est conçu pour le traitement d'une structure de fichier de données ou d'une logique de sujet sous format TXT.

6. Dispositif selon les revendications 3 à 5, **caractérisé en ce que** le programme est conçu pour l'exécution d'un programme de production pour le datawarehouse.

7. Dispositif selon la revendication 6, **caractérisé en ce que** le programme de production comprend un programme de commande, des modules de prétraitement, des modules d'agrégation et un module d'intégration.
